# EUROPÄISCHE PATENTANMELDUNG

(11) **EP 3 800 598 A1**
(43) Veröffentlichungstag der Anmeldung: **07.04.2021**
(21) Anmeldenummer: 20199837.4
(22) Anmeldetag: 02.10.2020
(51) Int. Cl.: G06Q 10/08

(54) **VERFAHREN ZUR MANIPULATIONSSICHEREN AUSLIEFERUNG EINES GEGENSTANDS SOWIE GEGENSTAND UND SYSTEM ZUR MANIPULATIONSSICHEREN AUSLIEFERUNG**

(30) Priorität: 04.10.2019 DE 102019126774
(71) Anmelder: EMH metering GmbH & Co. KG, 19258 Gallin (DE)
(72) Erfinder: Giebel, René, 22529 Hamburg (DE)
(74) Vertreter: Hauck Patentanwaltspartnerschaft mbB

(57) **Zusammenfassung**

Verfahren zur manipulationssicheren Auslieferung eines Gegenstands, wobei das Verfahren die folgenden Schritte aufweist:
a1) Bereitstellen eines auszuliefernden Gegenstands,
a2) Bereitstellen einer Einmalverpackung, die einen RFID-Tag aufweist,
b1) Erfassen einer eindeutigen Kennzeichnung des Gegenstands,
b2) Erfassen einer eindeutigen Kennzeichnung der Einmalverpackung,
b3) Anordnen des Gegenstands in der Einmalverpackung und Verschließen der Einmalverpackung,
b4) Auslesen einer eineindeutigen Kennung des RFID-Tags,
b5) Erzeugen eines Schlüssels,
b6) Speichern der eindeutigen Kennzeichnung des Gegenstands, der eindeutigen Kennzeichnung der Einmalverpackung und eines unter Verwendung des Schlüssels erzeugten Codes in dem RFID-Tag und Verriegeln des RFID-Tags,
b7) Speichern der eindeutigen Kennzeichnung des Gegenstands, der eindeutigen Kennzeichnung der Einmalverpackung, der eineindeutigen Kennung des RFID-Tags und des Schlüssels in einer Datenbank,
c) Transportieren des in der Einmalverpackung angeordneten Gegenstands an einen Auslieferungsort,
d1) Prüfen der Integrität der Einmalverpackung,
d2) Entnehmen des Gegenstands aus der Einmalverpackung,
d3) Durchführen eines ersten Validierungsschritts, in dem die eindeutige Kennzeichnung des Gegenstands und die eindeutige Kennzeichnung der Einmalverpackung aus dem RFID-Tag ausgelesen und mit den entsprechenden Kennzeichnungen an dem Gegenstand bzw. an der Verpackung verglichen werden,
d4) Durchführen eines zweiten Validierungsschritts, in dem ein von dem RFID-Tag unter Verwendung des in dem RFID-Tag gespeicherten Codes erzeugter Validierungsdatensatz ausgelesen und mit den in der Datenbank gespeicherten Daten abgeglichen wird.

## Beschreibung

Die Erfindung betrifft ein Verfahren zur manipulationssicheren Auslieferung eines Gegenstands, einen Gegenstand zur manipulationssicheren Auslieferung sowie ein System zur Ausführung des Verfahrens.

Eine manipulationssichere Auslieferung ist für ganz unterschiedliche Gegenstände von Bedeutung, beispielsweise für Medikamente oder Markenartikel, bei deren Auslieferung ein Einschleusen von Plagiaten verhindert werden soll. Bei der Erfindung geht es jedoch vorwiegend um eine Auslieferung elektronischer Geräte, die bei unbefugtem Zugriff derart manipuliert werden könnten, dass unter Umständen schwere Folgeschäden entstehen. Beispiele hierfür sind die elektronische Gesundheitskarte oder sonstige Speichermedien, die vertrauliche Daten enthalten, elektronische Verbrauchszähler aller Art, insbesondere Elektrizitätszähler, und Smart Meter Gateways.

Im Sprachgebrauch dieser Anmeldung ist eine Auslieferung dann manipulationssicher, wenn eine Manipulation des auszuliefernden bzw. ausgelieferten Gegenstands zuverlässig erkannt wird. Auf dieses Erkennen von Manipulationen zielen die einzelnen Sicherheitsmaßnahmen ab. Wird ein hinreichendes Sicherheitsniveau erreicht, ist eine Zertifizierung durch das Bundesamt für Sicherheit in der Informationstechnik (BSI) möglich. Derzeit besitzt ein spezielles Auslieferungsverfahren für Smart Meter Gateways eine Zertifizierung durch das BSI, bei dem mit einem elektronischen System vor unbefugtem Zugriff geschützte, stabile Transportboxen verwendet werden. Die Smart Meter Gateways werden beim Hersteller in die Transportbox gelegt und die Transportbox wird sicher verschlossen. Bei der Auslieferung kann ein Servicetechniker die Transportbox nur nach einer sicheren Kommunikation mit einem externen Dienstleistungsanbieter öffnen und nach Entnahme eines Smart Meter Gateways und einer weiteren, entsprechenden Kommunikation wieder verschließen.

Davon ausgehend ist es die Aufgabe der Erfindung, ein Verfahren zur manipulationssicheren Auslieferung eines Gegenstands zur Verfügung zu stellen, das ein hohes Sicherheitsniveau bietet und einfach auszuführen ist, sowie einen entsprechenden Gegenstand und ein System zur manipulationssicheren Auslieferung.

Diese Aufgabe wird gelöst durch das Verfahren mit den Merkmalen des Anspruchs 1. Vorteilhafte Ausgestaltungen sind in den Unteransprüchen angegeben. Das Verfahren dient der manipulationssicheren Auslieferung eines Gegenstands und weist die folgenden Schritte auf:
a1) Bereitstellen eines auszuliefernden Gegenstands,
a2) Bereitstellen einer Einmalverpackung, die einen RFID-Tag aufweist,
b1) Erfassen einer eindeutigen Kennzeichnung des Gegenstands,
b2) Erfassen einer eindeutigen Kennzeichnung der Einmalverpackung,
b3) Anordnen des Gegenstands in der Einmalverpackung und Verschließen der Einmalverpackung,
b4) Auslesen einer eineindeutigen Kennung des RFID-Tags,
b5) Erzeugen eines Schlüssels,
b6) Speichern der eindeutigen Kennzeichnung des Gegenstands, der eindeutigen Kennzeichnung der Einmalverpackung und eines unter Verwendung des Schlüssels erzeugten Codes in dem RFID-Tag und Verriegeln des RFID-Tags,
b7) Speichern der eindeutigen Kennzeichnung des Gegenstands, der eindeutigen Kennzeichnung der Einmalverpackung, der eineindeutigen Kennung des RFID-Tags und des Schlüssels in einer Datenbank,
c) Transportieren des in der Einmalverpackung angeordneten Gegenstands an einen Auslieferungsort,
d1) Prüfen der Integrität der Einmalverpackung,
d2) Entnehmen des Gegenstands aus der Einmalverpackung,
d3) Durchführen eines ersten Validierungsschritts, in dem die eindeutige Kennzeichnung des Gegenstands und die eindeutige Kennzeichnung der Einmalverpackung aus dem RFID-Tag ausgelesen und mit den entsprechenden Kennzeichnungen an dem Gegenstand bzw. an der Verpackung verglichen werden,
d4) Durchführen eines zweiten Validierungsschritts, in dem ein von dem RFID-Tag unter Verwendung des in dem RFID-Tag gespeicherten Codes erzeugter Validierungsdatensatz ausgelesen und mit den in der Datenbank gespeicherten Daten abgeglichen wird.

Wie die Bezeichnung der Schritte verdeutlicht, gliedert sich das Verfahren in vier Abschnitte. Die Schritte a1) und a2) sind vorbereitender Art. Nach Abschluss dieser Schritte liegt ein auslieferungsbereiter Gegenstand nebst spezieller Verpackung bereit.

Die Schritte b1) bis b7) beschreiben die Verpackung des Gegenstands einschließlich mehrerer Sicherheitsmaßnahmen, die in der Regel auf Seiten des den Gegenstand ausliefernden Unternehmens ausgeführt werden, insbesondere von einem Hersteller des Gegenstands am Herstellungsort oder in einem dem Hersteller zugeordneten, sicheren Lager.

Im Schritt c) wird der verpackte Gegenstand an einen Auslieferungsort transportiert. Dabei handelt es sich insbesondere um denjenigen Ort, an dem der Gegenstand seinem bestimmungsgemäßen Gebrauch zugeführt wird. Beispielsweise kann es sich um einen Einbau- oder Montageort handeln.

Die Schritte d1) bis d4) umfassen mehrere Sicherheitsmaßnahmen, die nach dem Transport des Gegenstands ausgeführt werden. Sie können beispielsweise von einem Servicetechniker ausgeführt werden, der den Gegenstand einbaut oder montiert. Grundsätzlich können alle Schritte genau in der im Anspruch angegebenen Reihenfolge ausgeführt werden. Abweichungen von dieser Reihenfolge sind jedoch möglich, insbesondere innerhalb der vier erläuterten Abschnitte.

Im Schritt a2) wird eine Einmalverpackung bereitgestellt, die einen RFID-Tag *(radio frequency identification tag)* aufweist. Der RFID-Tag kann insbesondere ein NFC-Tag (*near field communication tag*) sein. Mit dem Begriff "Einmalverpackung" ist gemeint, dass die Verpackung für eine einmalige Verwendung bestimmt ist. In der Regel wird sie nach Auslieferung des Gegenstands entsorgt. Die Einmalverpackung weist einen RFID-Tag auf, der vorzugsweise untrennbar mit der Einmalverpackung verbunden ist. Das bedeutet, dass der RFID-Tag nicht von der Einmalverpackung getrennt und durch einen anderen RFID-Tag ersetzt werden kann, ohne sichtbare Spuren zu hinterlassen. In der Regel wird der RFID-Tag nach der Auslieferung gemeinsam mit der Einmalverpackung entsorgt. Beispielsweise kann die Einmalverpackung ein Kunststoffbeutel sein oder eine Kunststofffolie aufweisen, mit der der RFID-Tag verschmolzen oder dauerhaft verklebt ist. Insbesondere kann es sich bei der Einmalverpackung um ein sogenanntes *"Safebag"* handeln.

In den Schritten b1) und b2) werden eindeutige Kennzeichnungen des Gegenstands bzw. der Einmalverpackung erfasst. Diese Kennzeichnungen sind eindeutig, weil sie den jeweiligen Gegenstand bzw. die Einmalverpackung eindeutig identifizieren, also im betreffenden Zusammenhang nur einmal vorkommen. Der Gegenstand kann insbesondere mit einer Typenbezeichnung und einer Seriennummer gekennzeichnet sein. Die Einmalverpackung kann ebenfalls beispielsweise mit einer Typenbezeichnung und einer fortlaufenden Nummer gekennzeichnet sein. Wahlweise kann in beiden Fällen auch eine eineindeutige Kennzeichnung realisiert werden, d.h. eine Kennzeichnung, die den betreffenden Gegenstand bzw. die Einmalverpackung auch insoweit eindeutig identifiziert, dass sie den betreffenden Gegenstand bzw. die Einmalverpackung auch ohne Typen- oder Herstellerangaben eineindeutig identifiziert. Bei der eindeutigen Kennzeichnung des Gegenstands kann es sich insbesondere um eine herstellerübergreifende Identifizierung (HUID) handeln. Die eindeutige Kennzeichnung der Einmalverpackung kann eine *Safebag-ID* sein. Beide Kennzeichnungen können in maschinenlesbarer Form ausgeführt werden, insbesondere als optische Kennzeichnung, zum Beispiel als Barcode oder 2D-Code.

Im Schritt b3) wird der Gegenstand in der Einmalverpackung angeordnet und die Einmalverpackung wird verschlossen. Der Verschluss der Einmalverpackung ist derart ausgeführt, dass er nicht ohne Beschädigung der Einmalverpackung wieder geöffnet werden kann, beispielsweise mit einer dauerhaften Verklebung.

Der RFID-Tag weist eine eineindeutige Kennung auf, die im Schritt b4) ausgelesen wird. Im Schritt b5) wird ein Schlüssel erzeugt, insbesondere von einem sogenannten *Hardware Security Module* (HSM). Vorzugsweise handelt es sich um einen individuell für den betreffenden RFID-Tag erzeugten Schlüssel, der nur einmal verwendet wird. Insbesondere kann es sich um einen symmetrischen Schlüssel handeln. Der Schlüssel kann insbesondere dem AES128-Standard genügen.

Im Schritt b6) werden die Kennzeichnungen von Gegenstand und Einmalverpackung sowie ein unter Verwendung des Schlüssels erzeugter Code in dem RFID-Tag gespeichert und der RFID-Tag wird verriegelt. Der Code kann insbesondere unter Verwendung des Schlüssels und der eineindeutigen Kennung des RFID-Tags erzeugt werden. Zum Beispiel kann der Code die unter Verwendung des Schlüssels verschlüsselte eineindeutige Kennung des RFID-Tags enthalten. Enthält der Code die verschlüsselte eineindeutige Kennung des RFID-Tags, wird außerdem dafür Sorge getragen, dass die eineindeutige Kennung des RFID-Tags nach dessen Verriegelung nicht wieder ausgelesen werden kann, jedenfalls nicht ohne Kenntnis des Schlüssels.

Das Erzeugen des Codes kann in dem RFID-Tag erfolgen; in diesem Fall wird dem RFID-Tag hierfür der Schlüssel zur Verfügung gestellt. Der Schlüssel selbst wird in dem RFID-Tag jedoch nicht gespeichert, insbesondere nicht so, dass er nach dem Verriegeln des RFID-Tags wieder ausgelesen kann. Die Kennzeichnungen können im Klartext gespeichert sein. Nach Ausführen des Schritts b6) ist der in der Einmalverpackung angeordnete Gegenstand versandfertig.

Der versandfertig verpackte Gegenstand kann nach Ausführung der Schritte b1) bis b6) im Prinzip beliebig lange und an einem beliebigem Ort gelagert werden, beispielsweise in einem Zentrallager oder einem Zwischenlager des Herstellers des Gegenstands. Besondere Schutzmaßnahmen zur Verhinderung eines unbefugten Zugriffs auf die verpackten Gegenstände sind nicht unbedingt notwendig, weil jegliche Manipulation später erkannt werden kann, wie nachfolgend noch erläutert wird.

Für die nach dem Transport erfolgende Validierung ist es erforderlich, die eindeutigen Kennzeichnungen des Gegenstands und der Einmalverpackung, die eineindeutige Kennzeichnung des RFID-Tags und den Schlüssel vor unbefugtem Zugriff geschützt zu speichern. Dies geschieht im Schritt b7) in einer Datenbank, vorzugsweise in verschlüsselter Form.

Im Schritt c) wird der Gegenstand in der Einmalverpackung an einen Auslieferungsort transportiert. Es versteht sich, dass für diesen Transport eine oder mehrere Umverpackungen möglich sind und dass der Transport wahlweise in mehreren Schritten, auch unter Verwendung von Zwischenlagern, ausgeführt werden kann. Wichtig ist dabei, dass der Gegenstand stets in der Einmalverpackung verbleibt.

Am Auslieferungsort erfolgt zunächst im Schritt d1) ein Prüfen der Integrität der Einmalverpackung. Hierzu wird die Einmalverpackung in der Regel in Augenschein genommen und auf Beschädigungen und/oder etwaige Manipulationsspuren untersucht. Falls derartige Spuren erkannt werden, wird der Gegenstand bevorzugt aus dem Verkehr gezogen und nicht weiter verwendet. Ist die Einmalverpackung hingegen in Ordnung, wird der Gegenstand im Schritt d2) aus der Einmalverpackung entnommen, wobei die Einmalverpackung in der Regel für eine weitere Verwendung unbrauchbar wird. In der Regel wird die Einmalverpackung anschließend entsorgt.

Nach dem Entnehmen des Gegenstands aus der Einmalverpackung kann der Gegenstand zunächst auf Beschädigungen untersucht werden, beispielsweise auf Spuren einer unbefugten Öffnung eines Gehäuses oder dergleichen.

Im Schritt d3) wird ein erster Validierungsschritt ausgeführt, beispielsweise von einem Servicetechniker, der auch die Schritte d1) und d2) ausgeführt hat. In diesem ersten Validierungsschritt werden die in dem RFID-Tag gespeicherten eindeutigen Kennzeichnungen des Gegenstands und der Einmalverpackung ausgelesen, insbesondere mit einem elektronischen Handgerät, dass ein RFID-Lesegerät aufweist, zum Beispiel mit einem Smartphone. Im einfachsten Fall kann das elektronische Handgerät die ausgelesenen Kennzeichnungen anzeigen und der Servicetechniker kann sie mit den entsprechenden, an dem Gegenstand bzw. an der Einmalverpackung sichtbaren Kennzeichnungen vergleichen. Vorzugsweise werden jedoch auch diese Schritte mithilfe des elektronischen Handgeräts ausgeführt, insbesondere in dem die an dem Gegenstand bzw. an der Einmalverpackung angebrachten Kennzeichnungen mit einem hierfür geeigneten Lesegerät ausgelesen werden, sodass der Vergleich mit den aus dem RFID-Tag ausgelesenen Kennzeichnungen automatisch erfolgen kann. Vorzugsweise wird dem Servicetechniker dann von dem elektronischen Handgerät das Ergebnis des ersten Validierungsschritts angezeigt, beispielsweise durch ein "grünes Licht", falls bei dem Vergleich keine Abweichungen festgestellt wurden. Werden bei dem Vergleich Abweichungen festgestellt, kann dies auf eine Manipulation hindeuten. In diesem Fall sollte der der Gegenstand aus dem Verkehr gezogen und nicht weiter verwendet werden. Auch dies kann dem Servicetechniker von dem elektronischen Handgerät angezeigt werden, beispielsweise durch ein "rotes Licht".

Im Schritt d4) findet ein zweiter Validierungsschritt statt. Dieser kann gleichzeitig mit dem ersten Validierungsschritt ausgeführt werden, jedoch auch unabhängig davon, davor oder danach. Im zweiten Validierungsschritt erzeugt der RFID-Tag unter Verwendung des Codes einen Validierungsdatensatz, der ausgelesen wird, insbesondere mit einem elektronischen Handgerät, vorzugsweise mit dem im Schritt d3) verwendeten. Der Validierungsdatensatz kann grundsätzlich auf beliebige Art und Weise unter Verwendung des Codes erzeugt werden, im einfachsten Fall kann er mit dem Code identisch sein. Der Validierungsdatensatz kann auch unter Verwendung der eineindeutigen Kennung des RFID-Tags erzeugt werden. Der Validierungsdatensatz wird mit den in der Datenbank gespeicherten Daten abgeglichen. Das heißt, es wird überprüft, ob der Validierungsdatensatz mit den gespeicherten Daten konsistent ist. Für diese Prüfung ist in der Regel der in der Datenbank gespeicherte Schlüssel erforderlich. Der Validierungsdatensatz wird wie erwähnt von dem RFID-Tag erzeugt. Der Validierungsdatensatz kann auch als PICC-Datensatz (*proximity integrated circuit card data*) bezeichnet werden.

Ist der Abgleich erfolgreich, d. h. sind die auf dem RFID-Tag gespeicherten Daten mit denjenigen in der Datenbank konsistent, kann mit hoher Sicherheit davon ausgegangen werden, dass der der Einmalverpackung entnommene Gegenstand im Originalzustand ist.

Das Verfahren zeichnet sich dadurch aus, dass mehrere technisch aufwändige, jedoch einfach und ohne spezielle Fachkenntnis auszuführende Schritte ineinandergreifen. Physische, der Einmalverpackung innewohnende Sicherheitseigenschaften werden durch elektronische, auf einer wirksamen Verschlüsselung basierende Maßnahmen ergänzt und wirken so zusammen, dass jegliche Manipulation praktisch unmöglich gemacht wird. Durch die besonderen Maßnahmen ist es weder möglich, den Gegenstand noch die Verpackung auszutauschen. Insgesamt wird mit einfach ausführbaren Schritten ein hohes Sicherheitsniveau erreicht.

In einer Ausgestaltung ist der Gegenstand ein elektronisches Gerät, insbesondere ein Smart Meter Gateway oder ein elektronischer Elektrizitätszähler. Wie bereits erläutert, benötigen elektronische Geräte aus unterschiedlichen Gründen Schutz vor Manipulation. Bei Verbrauchszählern wie elektronischen Elektrizitätszählern kann eine Manipulation zur Erfassung falscher Verbrauchsdaten führen. Andere elektronische Geräte, wie beispielsweise Smart Meter Gateways, könnten nach entsprechender Manipulation einen Zugriff für Dritte auf kritische Infrastrukturen wie beispielsweise das Elektrizitätsnetz ermöglichen. Eine manipulationssichere Auslieferung ist daher von besonderer Bedeutung.

In einer Ausgestaltung umfasst der Gegenstand mehrere miteinander verbundene und/oder vorkonfigurierte Elemente, wobei die eindeutige Kennzeichnung des Gegenstands mehrere Kennzeichnungselemente umfasst, die jeweils eines der Elemente eindeutig kennzeichnen. Beispielsweise kann der Gegenstand ein Smart Meter Gateway und einen elektronischen Elektrizitätszähler umfassen, die für die gemeinsame Verwendung in geeigneter Weise vorkonfiguriert oder physisch miteinander verbunden sind. In diesem Fall weisen beide Elemente, also sowohl das Smart Meter Gateway als auch der elektronische Elektrizitätszähler, eine eigene eindeutige Kennzeichnung auf, die ein Element der eindeutigen Kennzeichnung des gesamten Gegenstands bildet. Bei dem Verfahren werden dann die Kennzeichnungen aller Elemente erfasst und in gemeinsam mit der eindeutigen Kennzeichnung der zugehörigen Einmalverpackung, in der sämtliche Elemente angeordnet sind, gespeichert. Die Validierung in den Schritten d3) und d4) erfasst dementsprechend sämtliche in der Einmalverpackung angeordneten Elemente, die durch die eindeutige Kennzeichnung des Gegenstands identifiziert werden.

In einer Ausgestaltung weist der Gegenstand zusätzlich zu der eindeutigen Kennzeichnung eine Versiegelung mit einem Siegelkennzeichen auf, wobei zusätzlich zu der eindeutigen Kennzeichnung des Gegenstands im Schritt b1) das Siegelkennzeichen erfasst, in den Schritten b6) und b7) gespeichert und im Schritt d3) mit dem Siegelkennzeichen an dem Gegenstand verglichen wird. Bei der Versiegelung kann es sich beispielsweise um ein aufgeklebtes Siegel handeln, das so an einem Gehäuse des Gegenstands befestigt ist, dass es bei einer Öffnung des Gehäuses beschädigt wird. Es versteht sich, dass das Siegelkennzeichen ebenfalls maschinenlesbar ausgeführt sein kann, sodass für die Verarbeitung des Siegelkennzeichens die vorstehenden Erläuterungen zu den Kennzeichnungen des Gegenstands entsprechend gelten. Die Ausgestaltung bietet eine zusätzliche Sicherheit, weil die Integrität des Siegels in den elektronischen, ersten Validierungsschritt einbezogen wird.

In einer Ausgestaltung wird der Gegenstand vor Durchführung des Schritts d4) am Auslieferungsort eingebaut und/oder ausgeliefert und/oder montiert. In dieser Ausgestaltung wird in vorteilhafter Weise ausgenutzt, dass die Validierung in zwei Schritten erfolgt. Der erste Validierungsschritt kann dabei ohne Zugriff auf die in der Datenbank gespeicherten Informationen allein anhand des verpackten Gegenstands und der in dem RFID-Tag gespeicherten Daten ausgeführt werden. In der typischen Auslieferungssituation eines Smart Meter Gateways kann dies zum Beispiel von einem Servicetechniker in einem Hausinstallationsraum erledigt werden. Verläuft der erste Validierungsschritt erfolgreich, besteht bereits eine hohe Wahrscheinlichkeit dafür, dass keine Manipulation erfolgt ist. Es ist daher mit einem relativ geringen Risiko verbunden, den Gegenstand bereits auszuliefern bzw. einzubauen/zu montieren. Wird später, d. h. im Schritt d4), dennoch eine mögliche Manipulation erkannt, kann der Gegenstand immer noch aus dem Verkehr gezogen werden, bevor eine Schädigung eintritt.

In einer Ausgestaltung wird der Gegenstand nach Ausführung des Schritts d4) zur Benutzung freigegeben, falls bei dem Abgleich keine Abweichungen festgestellt werden. Diese Freigabe kann beispielsweise eine Mitteilung an den Lieferungsempfänger sein, dass der betreffende Gegenstand abschließend überprüft wurde und für die weitere Benutzung freigegeben ist. Im Falle eines elektronischen Gegenstands kann die Freigabe insbesondere in einer Freischaltung bestehen, welche eine technische Voraussetzung für die Verwendung des Geräts ist. Diese Freischaltung kann insbesondere in Form einer abschließenden Personalisierung des Gegenstands erfolgen, im Falle eines Smart Meter Gateways beispielsweise durch eine Personalisierung des Smart Meter Gateways durch einen Messstellenbetreiber oder durch einen Gateway-Administrator. In diesem Fall wird verhindert, dass potentiell schädliche Folgen einer zuvor unbemerkt gebliebenen Manipulation eintreten, weil der Gegenstand vor seiner Freigabe nicht in schädigender Weise eingesetzt werden kann.

In einer Ausgestaltung wird im Schritt d4) für das Abgleichen des Validierungsdatensatzes mit den in der Datenbank gespeicherten Daten aus dem Validierungsdatensatz unter Verwendung des in der Datenbank gespeicherten Schlüssels die eineindeutige Kennung des RFID Tags ermittelt und mit der in der Datenbank gespeicherten eineindeutigen Kennung verglichen. Das Ermitteln der eineindeutigen Kennung des RFID Tags aus dem Validierungsdatensatz ist durch Entschlüsselung des Validierungsdatensatz anhand des Schlüssels möglich, ohne Kenntnis des Schlüssels jedoch nicht. Es gelingt daher ein sicherer Abgleich der Daten.

In einer Ausgestaltung werden im Schritt d4) zusätzlich die aus dem RFID-Tag ausgelesene eindeutige Kennzeichnung des Gegenstands und die aus dem RFID-Tag ausgelesene eindeutige Kennzeichnung der Einmalverpackung mit den entsprechenden, in der Datenbank gespeicherten Kennzeichnungen verglichen. Somit wird im zweiten Validierungsschritt eine weitere Überprüfung der im Schritt d3) bereits überprüften Übereinstimmung ausgeführt, was eine zusätzliche Sicherheit bietet.

In einer Ausgestaltung werden die Schritte d3) und d4) unter Verwendung eines elektronischen Handgeräts durchgeführt, wobei der Schritt d3) lokal auf dem elektronischen Handgerät ausgeführt wird und der Schritt d4) eine verschlüsselte Kommunikation über ein Netzwerk mit der Datenbank umfasst. Auf diese Weise können die beiden Validierungsschritte ausgeführt werden, ohne den Schlüssel aus dem sicheren Bereich der Datenbank herauszugeben.

In einer Ausgestaltung wird die Datenbank von einem Unternehmen betrieben, das für die Verwertung des Gegenstands nach der Auslieferung zuständig ist, insbesondere von einem Messstellenbetreiber. In diesem Sinne für die Verwertung des Gegenstands zuständig kann auch ein Gateway-Administrator sein. Grundsätzlich kann die Datenbank auch vom Unternehmen des Herstellers betrieben werden. In diesem Fall kann der zweite Validierungsschritt unter der Regie des Herstellers erfolgen und die abschließende Freigabe nach erfolgreicher Durchführung des zweiten Validierungsschritts kann anschließend an das für die Verwertung des Gegenstands zuständige Unternehmen weitergeleitet werden. Die Datenbank und den zweiten Validierungsschritt dem für die Verwertung des Gegenstands nach der Auslieferung zuständigen Unternehmens zu überlassen, vereinfacht jedoch die Kommunikation. In diesem Fall kann insbesondere vorgesehen sein, die im Schritt b7) gespeicherten Daten vom Hersteller bzw. von dem die Schritte b1) bis b6) ausführenden Unternehmen an das für die Verwertung zuständige Unternehmen in verschlüsselter Form zu übermitteln, beispielsweise mithilfe eines elektronischen Lieferscheins.

In einer Ausgestaltung ist der RFID-Tag dazu ausgebildet, eine Anzahl von Auslesevorgängen zu erfassen und zu speichern und in Abhängigkeit einer aktuellen Anzahl von Auslesevorgängen wechselnde Validierungsdatensätze zu erzeugen. Im Schritt d4) kann zusätzlich zu dem Validierungsdatensatz die zugehörige Anzahl von Auslesevorgängen bei dem Abgleich mit den in der Datenbank gespeicherten Daten berücksichtigt wird bzw. diese Information kann in dem Validierungsdatensatz zusätzlich enthalten sein. Mit anderen Worten umfasst der RFID-Tag einen Zähler, der bei jeder Auslesung erhöht wird. Durch die Verwendung wechselnder Validierungsdatensätze wird es Dritten noch weiter erschwert, einen für einen bestimmten RFID-Tag gültigen Validierungsdatensatz anzugeben.

In einer Ausgestaltung erfolgen im Schritt d4) das Erzeugen und Auslesen des Validierungsdatensatzes in einem Challenge-Response-Verfahren. Bei der Erzeugung des Validierungsdatensatzes wird beispielsweise eine bei der Abfrage des Validierungsdatensatzes an den RFID-Tag übermittelte Zufallszahl berücksichtigt, sodass die Antwort ebenfalls wechselnde Validierungsdatensätze umfasst. Beim Abgleich mit den in der Datenbank gespeicherten Daten wird dann überprüft, ob Zufallszahl und Antwort (also *challenge* und *response)* mit den gespeicherten Daten konsistent sind.

In einer Ausgestaltung weist die Einmalverpackung Sicherheitsmerkmale auf, die dazu ausgebildet sind, eine Manipulation der Einmalverpackung anzuzeigen, insbesondere eines oder mehrere der folgenden Sicherheitsmerkmale: einen nicht beschädigungsfrei zu öffnenden Verschluss, eine Größenangabe, eine thermoempfindliche Beschichtung, einen Feuchtigkeitsdetektor. Beispielsweise in Verbindung mit einem sogenannten *Safebag* verhindert die Größenangabe, realisiert beispielsweise durch auf die Ränder des Kunststoffbeutels weisende Pfeile, dass der Beutel nach unbefugter Öffnung unerkannt verkleinert wird. Die thermoempfindliche Beschichtung zeigt eine unter Verwendung von Kälte oder Hitze vorgenommene Manipulation an, beispielsweise durch eine Verfärbung. Als Feuchtigkeitsdetektor kann beispielswiese ein feuchtigkeitsempfindlicher Aufdruck verwendet werden, der bei Kontakt mit einem Lösungsmittel verwischt wird oder sich verfärbt. Alle genannten Maßnahmen können auch miteinander kombiniert werden. Insgesamt wird es durch die genannten Sicherheitsmerkmale erheblich erschwert, unbemerkt Zugriff auf den Inhalt der Einmalverpackung zu erhalten.

Die oben angegebene Aufgabe wird ebenfalls gelöst durch einen Gegenstand zur manipulationssicheren Auslieferung mit den Merkmalen des Anspruchs 14. Der Gegenstand zur manipulationssicheren Auslieferung weist die folgenden Merkmale auf:
- der Gegenstand weist eine eindeutige Kennzeichnung auf und ist in einer verschlossenen Einmalverpackung angeordnet,
- die Einmalverpackung weist eine eindeutige Kennzeichnung und einen RFID-Tag auf,
- in dem RFID-Tag sind die eindeutige Kennzeichnung des Gegenstands, die eindeutige Kennzeichnung der Einmalverpackung und ein unter Verwendung des Schlüssels erzeugter Code gespeichert,
- der RFID-Tag weist eine eineindeutige Kennung auf und ist dazu ausgebildet, unter Verwendung des Schlüssels einen Validierungsdatensatz zu erzeugen.

Zur Erläuterung der Eigenschaften und Vorteile des Gegenstands wird auf die vorstehenden Erläuterungen des Verfahrens verwiesen, die entsprechend gelten. Es versteht sich, dass der Gegenstand in bevorzugten Ausgestaltungen weitere aus der beschriebenen Anwendung des Verfahrens folgende Merkmale aufweisen kann. Zum Beispiel kann der RFID-Tag dazu ausgebildet sein, den Validierungsdatensatz unter Verwendung des Schlüssels und der eineindeutigen Kennung zu erzeugen. Insbesondere kann die Einmalverpackung eines oder mehrere der erläuterten Sicherheitsmerkmale aufweisen, der Gegenstand kann mit einer Versiegelung mit einem Siegelkennzeichen versehen und die diesbezüglichen Daten können auf dem RFID-Tag gespeichert sein, der Gegenstand kann ein elektronisches Gerät sein, insbesondere ein Smart Meter Gateway oder ein elektronischer Elektrizitätszähler, oder er kann mehrere miteinander verbundene und/oder vorkonfigurierte Elemente umfassen, usw.

Die oben angegebene Aufgabe wird ebenfalls gelöst durch das System mit den Merkmalen des Anspruchs 15. Das System dient zur Ausführung eines Verfahrens gemäß einem der Ansprüche 1 bis 13 und weist folgendes auf:
- eine Verpackungsstation, die (i) ein Lesegerät zur Ausführung der Schritte b1) und b2), (ii) eine Schlüsselerzeugungseinrichtung (HSM) zur Ausführung des Schritts b3) und (iii) ein RFID-Schreib-/Lesegerät zur Ausführung der Schritte b4) und b6) umfasst,
- eine Datenbank zur Speicherung der im Schritt b7) genannten Daten sowie zu deren Bereitstellung zur Durchführung des Schritts d4),
- ein elektronisches Auslieferungsgerät, das ein RFID-Lesegerät, ein Lesegerät zum Erfassen eindeutiger Kennzeichnungen und eine Anzeige aufweist, wobei das Auslieferungsgerät dazu ausgebildet ist, den Schritt d3) auszuführen und das Ergebnis des Vergleichs anzuzeigen, und
- einen Validierungsrechner, der über Netzwerkverbindungen mit dem Auslieferungsgerät und der Datenbank verbindbar und dazu ausgebildet ist, den Schritt d4) auszuführen und ein Ergebnis des Abgleichs bereitzustellen.

Zu den Merkmalen und Vorteilen des Systems wird auf die vorstehenden Erläuterungen des Verfahrens und des Gegenstands verwiesen, die entsprechend gelten. Es versteht sich, dass auch eine Ausgestaltung des Systems entsprechend den im Einzelnen erläuterten Ausgestaltungen des Verfahrens bzw. des Gegenstands möglich ist.

Die Verpackungsstation kann beispielsweise ein Arbeitsplatz sein, der einen oder mehrere Computer mit einer Software aufweist, insbesondere in einem für die Ausführung der Schritte b1) bis b6) zuständigen Unternehmen.

Das elektronische Auslieferungsgerät kann insbesondere das vorstehend bereits erwähnte elektronische Handgerät sein, das beispielsweise von einem Servicetechniker verwendet wird.

Der Validierungsrechner ist für den Schritt d4) zuständig. Er kann am Standort der Datenbank oder davon entfernt angeordnet sein, beispielsweise im Unternehmen des Herstellers oder in einem Unternehmen, das für die nach der Auslieferung erfolgende Verwertung des Gegenstands zuständig ist. Die Bereitstellung des Ergebnisses des Abgleichs kann beispielsweise in einer Information an den Servicetechniker bestehen, bereitgestellt beispielsweise über das elektronische Handgerät. Es kommt jedoch auch eine andere Bereitstellung des Ergebnisses des Abgleichs in Betracht, die dazu geeignet ist, von einer etwaigen Manipulation betroffene Gegenstände aus dem Verkehr zu ziehen.

Nachfolgend wird die Erfindung anhand eines in Figuren dargestellten Ausführungsbeispiels näher erläutert. Es zeigen:
- Fig. 1: eine Illustration zur Auslieferung von Smart Meter Gateways mit dem erfindungsgemäßen Verfahren,
- Fig. 2: eine Einmalverpackung für ein Smart Meter Gateway und
- Fig. 3: ein Smart Meter Gateway.

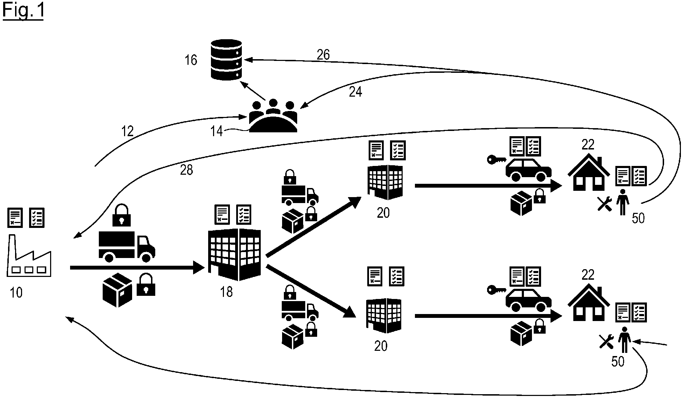

Figur 1 zeigt ganz links den Herstellungsort von Smart Meter Gateways, kurz bezeichnet als Gateway-Hersteller 10. Beim Gateway-Hersteller 10 werden die Verfahrensschritte a1), a2) und b1) bis b6) ausgeführt. Es werden also die auszuliefernden Smart Meter Gateways nach ihrer Herstellung für die Auslieferung bereitgestellt, ebenso die für die Auslieferung vorgesehenen Einmalverpackungen, die jeweils einen RFID-Tag aufweisen, im Beispiel in Form sogenannter *Safebags.*

Anschließend werden beim Gateway-Hersteller 10 die eindeutigen Kennzeichnungen des Smart Meter Gateways und der Einmalverpackung erfasst und das Smart Meter Gateway wird in der Einmalverpackung angeordnet und die Einmalverpackung wird verschlossen. Außerdem wird beim Gateway-Hersteller 10 die eineindeutige Kennung des RFID-Tags ausgelesen. Der für die weiteren Verfahrensschritte erforderliche Schlüssel kann entweder beim Gateway-Hersteller 10 erzeugt werden, insbesondere mithilfe eines sogenannten *High Security Modules* (HSM), er kann jedoch auch von externer Stelle in verschlüsselter Form an den Gateway-Hersteller 10 übermittelt werden. Schließlich werden beim Gateway-Hersteller 10 die eindeutige Kennzeichnung des Smart Meter Gateways, die eindeutige Kennzeichnung der Einmalverpackung und ein unter Verwendung des Schlüssels erzeugter Code in dem RFID-Tag gespeichert und der RFID-Tag wird verriegelt. Anschließend ist eine Auslesung der eineindeutigen Kennung des RFID-Tags jedenfalls ohne Kenntnis des Schlüssels nicht mehr möglich.

Weiterhin werden die eindeutige Kennzeichnung des Smart Meter Gateways, die eindeutige Kennzeichnung der Einmalverpackung, die eineindeutige Kennung des RFID-Tags und der Schlüssel von dem Gateway-Hersteller 10 in einer Datenbank gespeichert. Figur 1 veranschaulicht hierzu die Übermittlung der genannten Daten über eine verschlüsselte Netzwerkverbindung 12 an einen Gateway-Administrator 14, der die genannten Daten dann in der Datenbank 16 speichert.

Nachdem die genannten Schritte für eine Vielzahl von Smart Meter Gateways durchgeführt und die jeweils in einer Einmalverpackung angeordneten Smart Meter Gateways gegebenenfalls in geeigneter Weise umverpackt worden sind, erfolgt der Transport zu einem Auslieferungsort. Dies geschieht im Beispiel der Figur 1 in mehreren Schritten, zunächst per Lkw in ein Zentrallager 18, von dort aus per Lkw weiter zu mehreren Zwischenlagern 20.

Aus den Zwischenlagern 20 holen die für den Einbau der Smart Meter Gateways zuständigen Servicetechniker 50 mit ihrem Pkw eine bestimmte Anzahl von Smart Meter Gateways ab und transportieren sie im eigenen Pkw zum Auslieferungsort, im Beispiel zum jeweiligen Montageort in einem Haushalt 22. Während des gesamten Transports, vom Gateway-Hersteller 10 über Zentrallager 18 und Zwischenlager 20 bis zu dem Haushalt 22 befindet sich jedes Smart Meter Gateway in seiner Einmalverpackung.

Am Montageort, also in dem betreffenden Haushalt 22, entnimmt der Servicetechniker 50 ein in seiner Einmalverpackung befindliches Smart Meter Gateway aus einer Umverpackung und prüft zunächst die Integrität der Einmalverpackung. Stellt er keine Beschädigungen oder sonstige Anzeichen einer Manipulation fest, entnimmt er das Smart Meter Gateway aus der Einmalverpackung.

Anschließend überprüft er das Smart Meter Gateway ebenfalls auf mögliche Manipulationen, feststellbar beispielsweise an einem gebrochenen Siegel oder an Öffnungsspuren am Gehäuse. Ist soweit alles in Ordnung, führt er einen ersten Validierungsschritt durch, wofür er ein elektronisches Handgerät, insbesondere ein Smartphone, einsetzt. Mit dem elektronischen Handgerät erfasst er, beispielsweise mit einem Barcode-Leser, die eindeutige Kennzeichnung des Smart Meter Gateways (HUID) und die eindeutige Kennzeichnung der Einmalverpackung (*Safebag-*ID). Außerdem weist das elektronische Handgerät ein RFID-Lesegerät auf, mit dem die entsprechenden, auf dem RFID-Tag gespeicherten Daten ausgelesen werden. Anschließend erfolgt ein Vergleich der in dem RFID-Tag gespeicherten Daten mit den vom Gegenstand bzw. von der Einmalverpackung abgelesenen Daten. Stimmen die jeweiligen Kennzeichnungen überein, ist der erste Validierungsschritt erfolgreich verlaufen und der Servicetechniker 50 baut das Smart Meter Gateway in dem Haushalt 22 ein. Hierfür benötigt der Servicetechniker 50 keinen Zugriff auf die Datenbank 16. Vielmehr kann er nach erfolgtem Einbau gegebenenfalls unmittelbar zu einem weiteren Haushalt 22 fahren und dort ein weiteres Smart Meter Gateway montieren.

Zuvor hat der Servicetechniker 50 bzw. sein elektronisches Handgerät jedoch bereits einen Validierungsdatensatz aus dem RFID-Tag ausgelesen, den der RFID-Tag unter Verwendung des in dem RFID-Tag gespeicherten Codes und der eineindeutigen Kennung des RFID-Tags erzeugt hat. Dieser Validierungsdatensatz wird von dem Servicetechniker 50 bzw. vollautomatisch von seinem elektronischen Handgerät an den Gateway-Administrator 14 übermittelt, wie durch den Pfeil 24 veranschaulicht. Alternativ kann die Übermittlung auch direkt zu der Datenbank 16 hin erfolgen, wie durch den Pfeil 26 illustriert. Dann kann der zweite Validierungsschritt von dem Gateway-Administrator 14 durchgeführt werden. Hierzu entschlüsselt der Gateway-Administrator 14 bzw. ein hierfür vorgesehener Validierungsrechner den übermittelten Validierungsdatensatz und rekonstruiert daraus die eineindeutige Kennung des jeweiligen RFID-Tags. Anschließend erfolgt ein Abgleich mit den zugehörigen, in der Datenbank 16 gespeicherten Daten. Sind alle Daten konsistent, ist der zweite Validierungsschritt erfolgreich verlaufen, und der Gateway-Administrator 14 schaltet das zu diesem Zeitpunkt bereits in dem Haushalt 22 montierte Smart Meter Gateway frei, indem er es endgültig personalisiert.

Der Pfeil 28 veranschaulicht eine Kommunikation von dem Servicetechniker 50 bzw. von dessen elektronischem Handgerät zurück zum Gateway-Hersteller 10. Sofern die für den zweiten Validierungsschritt benötigten Daten auf diesem Wege übermittelt werden, kann der zweite Validierungsschritt auch vom Gateway-Hersteller 10 ausgeführt werden.

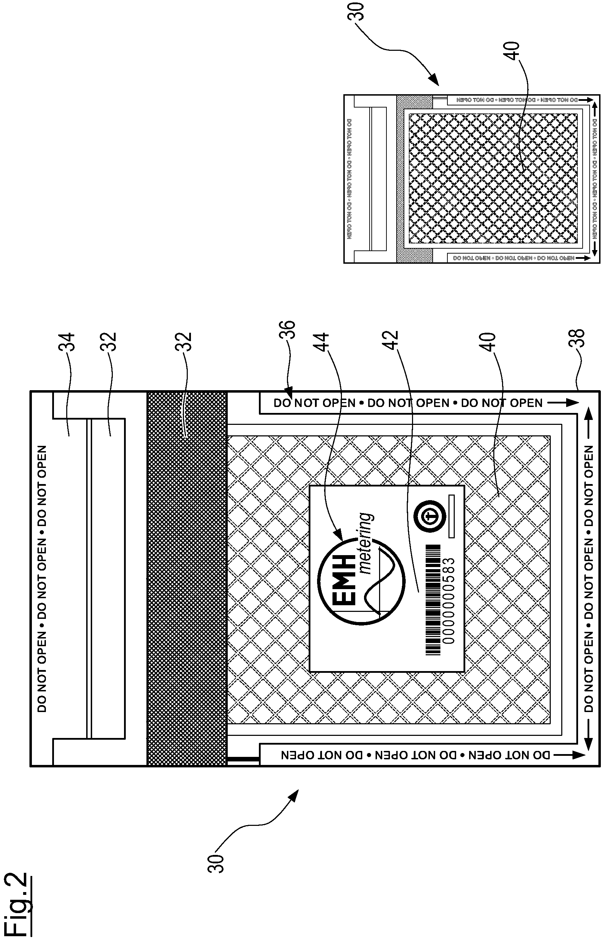

Figur 2 zeigt in zwei Ansichten Vorder- und Rückseite eines *Safebags,* der als Einmalverpackung für ein Smart Meter Gateway vorgesehen ist. Bei dem *Safebag* 30 handelt es sich um einen Kunststoffbeutel, der eine zur Aufnahme eines Smart Meter Gateways geeignete Größe aufweist, beispielsweise etwa DIN A4-Format. Die Einmalverpackung weist mehrere Sicherheitsmerkmale auf. Hierzu zählt eine Verklebung zweier breiter Klebefläche 32, die durch Umschlagen einer Lasche am oberen Rand des Beutels vorgenommen wird. Die untere Klebefläche 32 weist dabei eine Schutzfolie auf, die vor dem Verkleben abgezogen wird. Die Verklebung kann nicht ohne Beschädigung des Beutels wieder geöffnet werden. In dem mit dem Bezugszeichen 34 versehenen Abschnitt, benachbart zu dem Klebestreifen 22 an der umzuschlagenden Lasche, weist die Einmalverpackung einen Feuchtigkeitsdetektor auf. Dieser weist ein feines Muster blauer Linien auf, die bei Einwirkung von Feuchtigkeit verwischen.

Mit Ausnahme der Seite mit der umzuschlagenden Lasche sind alle drei Kanten des Kunststoffbeutels mit einer breiten Verschweißung 36 versehen, in die Größenangaben 38 in Form von zu den Ecken weisenden Pfeilen integriert sind.

Zudem weisen Vorder- und Rückseite großflächig eine thermoempfindliche Beschichtung 40 auf. Ebenfalls erkennbar ist eine eindeutige Kennzeichnung der Einmalverpackung in Form eines Barcodes 42 und einer fortlaufenden Nummerierung.

In die Vorderseite des Kunststoffbeutels ist außerdem ein RFID-Tag 44 integriert, der unlösbar mit der Kunststofffolie verschmolzen ist. Er ist in der Figur 2 nicht erkennbar. Bevorzugt befindet er sich an einer von außen gut sichtbaren, durch einen besonderen Aufdruck gekennzeichneten Stelle.

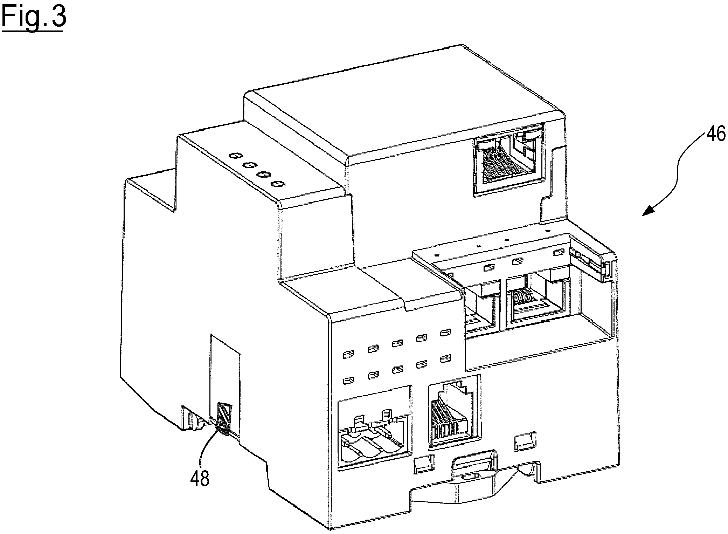

Figur 3 veranschaulicht in einer perspektivischen Ansicht ein Smart Meter Gateway 46, das an seiner nicht sichtbaren Unterseite eine eindeutige Kennzeichnung in Form eines Barcodes aufweist. Außerdem gibt es ein am linken Rand erkennbares Siegel 48, das so mit zwei Teilen des Gehäuses des Smart Meter Gateways 46 verklebt ist, dass es bei einer Öffnung des Gehäuses gebrochen wird. Auch dieses Siegel 48 weist eine eindeutige Kennzeichnung auf, vorstehend bezeichnet als Siegelkennzeichen. Dabei handelt es sich im Beispiel um einen DataMatrix-Code, der ebenfalls auf der nicht sichtbaren Unterseite des Smart Meter Gateways angeordnet ist.

### Liste der Bezugszeichen

- 10: Gateway-Hersteller
- 12: Netzwerkverbindung
- 14: Gateway-Administrator
- 16: Datenbank
- 18: Zentrallager
- 20: Zwischenlager
- 22: Haushalt
- 24: Pfeil
- 26: Pfeil
- 28: Pfeil
- 30: Safebag
- 32: Klebefläche
- 34: Abschnitt
- 36: Verschweißung
- 38: Größenangabe
- 40: thermoempfindliche Beschichtung
- 42: Barcode (Safebag-ID)
- 44: RFID-Tag
- 46: Smart Meter Gateway
- 48: Siegel
- 50: Servicetechniker

## Patentansprüche

1. Verfahren zur manipulationssicheren Auslieferung eines Gegenstands, wobei das Verfahren die folgenden Schritte aufweist:
a1) Bereitstellen eines auszuliefernden Gegenstands,
a2) Bereitstellen einer Einmalverpackung, die einen RFID-Tag (44) aufweist,
b1) Erfassen einer eindeutigen Kennzeichnung des Gegenstands,
b2) Erfassen einer eindeutigen Kennzeichnung der Einmalverpackung,
b3) Anordnen des Gegenstands in der Einmalverpackung und Verschließen der Einmalverpackung,
b4) Auslesen einer eineindeutigen Kennung des RFID-Tags (44),
b5) Erzeugen eines Schlüssels,
b6) Speichern der eindeutigen Kennzeichnung des Gegenstands, der eindeutigen Kennzeichnung der Einmalverpackung und eines unter Verwendung des Schlüssels erzeugten Codes in dem RFID-Tag (44) und Verriegeln des RFID-Tags (44),
b7) Speichern der eindeutigen Kennzeichnung des Gegenstands, der eindeutigen Kennzeichnung der Einmalverpackung, der eineindeutigen Kennung des RFID-Tags (44) und des Schlüssels in einer Datenbank (16),
c) Transportieren des in der Einmalverpackung angeordneten Gegenstands an einen Auslieferungsort,
d1) Prüfen der Integrität der Einmalverpackung,
d2) Entnehmen des Gegenstands aus der Einmalverpackung,
d3) Durchführen eines ersten Validierungsschritts, in dem die eindeutige Kennzeichnung des Gegenstands und die eindeutige Kennzeichnung der Einmalverpackung aus dem RFID-Tag (44) ausgelesen und mit den entsprechenden Kennzeichnungen an dem Gegenstand bzw. an der Verpackung verglichen werden,
d4) Durchführen eines zweiten Validierungsschritts, in dem ein von dem RFID-Tag (44) unter Verwendung des in dem RFID-Tag (44) gespeicherten Codes erzeugter Validierungsdatensatz ausgelesen und mit den in der Datenbank (16) gespeicherten Daten abgeglichen wird.

2. Verfahren nach Anspruch 1, **dadurch gekennzeichnet, dass** der Gegenstand ein elektronisches Gerät ist, insbesondere ein Smart-Meter-Gateway (46) oder ein elektronischer Elektrizitätszähler.

3. Verfahren nach Anspruch 1 oder 2, **dadurch gekennzeichnet, dass** der Gegenstand mehrere miteinander verbundene und/oder vorkonfigurierte Elemente umfasst, wobei die eindeutige Kennzeichnung des Gegenstands mehrere Kennzeichnungselemente umfasst, die jeweils eines der Elemente eindeutig kennzeichnen.

4. Verfahren nach einem der Ansprüche 1 bis 3, **dadurch gekennzeichnet, dass** der Gegenstand zusätzlich zu der eindeutigen Kennzeichnung eine Versiegelung mit einem Siegelkennzeichen aufweist, wobei zusätzlich zu der eindeutigen Kennzeichnung des Gegenstands im Schritt b1) das Siegelkennzeichen erfasst, in den Schritten b6) und b7) gespeichert und im Schritt d3) mit dem Siegelkennzeichen an dem Gegenstand verglichen wird.

5. Verfahren nach einem der Ansprüche 1 bis 4, **dadurch gekennzeichnet, dass** der Gegenstand vor Durchführung des Schritts d4) am Auslieferungsort ausgeliefert und/oder montiert wird.

6. Verfahren nach einem der Ansprüche 1 bis 5, **dadurch gekennzeichnet, dass** der Gegenstand nach Durchführung des Schritts d4) zur Benutzung freigegeben wird.

7. Verfahren nach einem der Ansprüche 1 bis 6, **dadurch gekennzeichnet, dass** im Schritt d4) für das Abgleichen des Validierungsdatensatzes mit den in der Datenbank (16) gespeicherten Daten aus dem Validierungsdatensatz unter Verwendung des in der Datenbank (16) gespeicherten Schlüssels die eineindeutige Kennung des RFID-Tags (44) ermittelt und mit der in der Datenbank (16) gespeicherten eineindeutigen Kennung verglichen wird.

8. Verfahren nach einem der Ansprüche 1 bis 7, **dadurch gekennzeichnet, dass** im Schritt d4) zusätzlich die aus dem RFID-Tag (44) ausgelesene eindeutige Kennzeichnung des Gegenstands und die aus dem RFID-Tag (44) ausgelesene eindeutige Kennzeichnung der Einmalverpackung mit den entsprechenden, in der Datenbank (16) gespeicherten Kennzeichnungen verglichen werden.

9. Verfahren nach einem der Ansprüche 1 bis 8, **dadurch gekennzeichnet, dass** die Schritte d3) und d4) unter Verwendung eines elektronischen Handgeräts durchgeführt werden, wobei der Schritt d3) lokal auf dem elektronischen Handgerät ausgeführt wird und der Schritt d4) eine verschlüsselte Kommunikation über ein Netzwerk mit der Datenbank (16) umfasst.

10. Verfahren nach einem der Ansprüche 1 bis 9, **dadurch gekennzeichnet, dass** die Datenbank (16) von einem Unternehmen betrieben wird, das für die Verwertung des Gegenstands nach der Auslieferung zuständig ist, insbesondere von einem Messstellenbetreiber.

11. Verfahren nach einem der Ansprüche 1 bis 10, **dadurch gekennzeichnet, dass** der RFID-Tag (44) dazu ausgebildet ist, eine Anzahl von Auslesevorgängen zu erfassen und zu speichern und in Abhängigkeit einer aktuellen Anzahl von Auslesevorgängen wechselnde Validierungsdatensätze zu erzeugen.

12. Verfahren nach einem der Ansprüche 1 bis 11, **dadurch gekennzeichnet, dass** im Schritt d4) das Erzeugen und Auslesen des Validierungsdatensatzes in einem Challenge-Response-Verfahren erfolgen.

13. Verfahren nach einem der Ansprüche 1 bis 12, **dadurch gekennzeichnet, dass** die Einmalverpackung Sicherheitsmerkmale aufweist, die dazu ausgebildet sind, eine Manipulation der Einmalverpackung anzuzeigen, insbesondere eines oder mehrere der folgenden Sicherheitsmerkmale: einen nicht beschädigungsfrei zu öffnenden Verschluss, eine Größenangabe, eine thermoempfindliche Beschichtung, einen Feuchtigkeitsdetektor.

14. Gegenstand zur manipulationssicheren Auslieferung, mit den folgenden Merkmalen:
• der Gegenstand weist eine eindeutige Kennzeichnung auf und ist in einer verschlossenen Einmalverpackung angeordnet,
• die Einmalverpackung weist eine eindeutige Kennzeichnung und einen RFID-Tag (44) auf,
• in dem RFID-Tag (44) sind die eindeutige Kennzeichnung des Gegenstands, die eindeutige Kennzeichnung der Einmalverpackung und ein unter Verwendung des Schlüssel erzeugter Code gespeichert,
• der RFID-Tag (44) weist eine eineindeutige Kennung auf und ist dazu ausgebildet, unter Verwendung des Codes und einen Validierungsdatensatz zu erzeugen.

15. System zur Ausführung eines Verfahrens gemäß einem der Ansprüche 1 bis 13, wobei das System folgendes aufweist:
• eine Verpackungsstation, die (i) ein Lesegerät zur Ausführung der Schritte b1) und b2), (ii) eine Schlüsselerzeugungseinrichtung (HSM) zur Ausführung des Schritts b3) und (iii) ein RFID-Schreib-/Lesegerät zur Ausführung der Schritte b4) und b6) umfasst,
• eine Datenbank (16) zur Speicherung der im Schritt b7) genannten Daten sowie zu deren Bereitstellung zur Durchführung des Schritts d4),
• ein elektronisches Auslieferungsgerät, das ein RFID-Lesegerät, ein Lesegerät zum Erfassen eindeutiger Kennzeichnungen und eine Anzeige aufweist, wobei das Auslieferungsgerät dazu ausgebildet ist, den Schritt d3) auszuführen und das Ergebnis des Vergleichs anzuzeigen, und
• einen Validierungsrechner, der über Netzwerkverbindungen mit dem Auslieferungsgerät und der Datenbank (44) verbindbar und dazu ausgebildet ist, den Schritt d4) auszuführen, und ein Ergebnis des Abgleichs bereitzustellen.
